# EUROPEAN PATENT SPECIFICATION

(11) **EP 2 425 125 B1**
(45) Date of publication and mention of the grant of the patent: **06.11.2013**
(21) Application number: 10769999.3
(22) Date of filing: 28.04.2010
(51) Int. Cl.: F03B 17/06, F03B 13/18

(54) **WAVE POWER PLANT**
WELLENKRAFTWERK
CENTRALE HOULOMOTRICE

(30) Priority: 30.04.2009 NO 20091718
(43) Date of publication of application: 07.03.2012
(73) Proprietor: Tidal Sails AS, 5527 Haugesund (NO)
(72) Inventor: BØRGESEN, Are, N-5538 Haugesund (NO)
(74) Representative: Håmsø, Gunnar
(86) International application number: PCT/NO2010/000154
(87) International publication number: WO 2010/126378

(56) References cited:
- WO-A1-94/21913
- DE-A1- 2 740 939
- GB-A- 1 482 085
- GB-A- 2 062 130
- NL-A- 7 506 125

## Description

This invention relates to a wave power plant. More particularly, it concerns a wave power plant, wherein a submerged foil is pivotally supported about a body, and wherein the foil is structured in a manner allowing it to be set into a swinging pivotal motion about the body.

Wave power plants are known in a number of embodiments, which oftentimes exploit the alternating heights of waves. Best known are possibly the so-called tapered channel plants, oscillating fluid columns and float-based pumps. What they have in common is that they oftentimes comprise relatively large and complicated surface structures severely affected by weather conditions, the structures of which have proven to be relatively costly both in terms of installation and operation.

GB 1482085 discloses an apparatus for extraction of energy from a wave pattern on the surface of a body of water comprising a floatable structure and at least one so called duck mounted for oscillating movement about a turning axis of the structure.

The object of the invention is to remedy or reduce at least one of the disadvantages of the prior art.

The object is achieved in accordance with the invention by virtue of the features disclosed in the following description and in the subsequent claims.

A wave power plant is provided, wherein, in use, a submerged foil is pivotally supported about a body, and wherein the foil is structured in a manner allowing it to be set into an oscillating, pivotal motion about the body. The wave power plant is characterised in that the body is pretensioned and is provided with a plurality of foils; and - wherein a power engine, which is connected between the foil and the body, is structured in a manner allowing it to deliver power by means of the pivotal motion of the foil.

By virtue of the foils being submerged and located at e.g. 0.5 to 3 metres below the water surface, the foils will be affected by the rolling motion of the waves, but they will only be insignificantly exposed to impacts of the type to which surface equipment is exposed.

The foils may be formed having any suitable shape, but a relatively elongated, droplike cross section appears to provide the best degree of efficiency.

The body may be stretchable over a cove or a strait. By so doing, it is relatively simple to arrange fasteners for the body, particularly when the shoreline is comprised of rocks.

The body may be connected to one or more stays, wherein each stay, at one end portion thereof, is connected to the body, whereas the opposite end portion thereof is, when in use, anchored to a seabed. The stay is structured in a manner allowing it to keep the body at the desired depth, and to allow it to withstand torsional forces from the body.

If the foils are to be prevented from pivoting 180 degrees about the body, a stay hinged to the foil and extending down to a fastener at the seabed may be appropriate.

The body may comprise a wire, a pipe or another suitable stay, and the body may comprise several parallel and separately extending portions.

The power engine may be comprised of a pump, preferably a hydraulic pump connected to a hydraulic motor, where the hydraulic motor may drive an electric generator. Advantageously, the hydraulic motor and the generator may be located onshore.

If appropriate, the power engine in the foil may be comprised of an electric generator.

A device according to the invention renders possible to exploit wave energy also in areas close to land, and at a reasonable cost. Given that the active components are submerged, the device is only insignificantly exposed to extreme weather conditions.

An example of a preferred embodiment is described in the following and is depicted in the accompanying drawings is described, where:

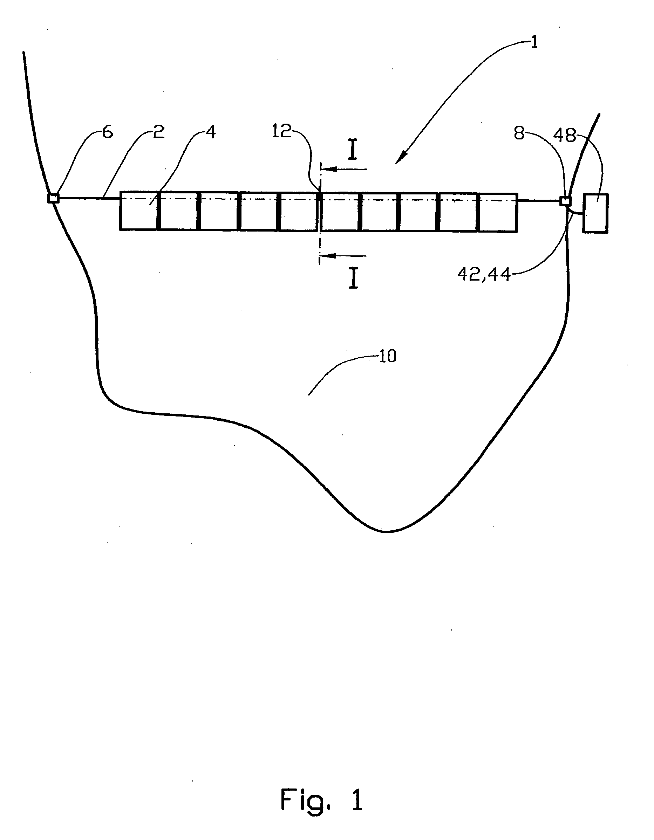

- Fig. 1: schematically shows a wave power plant according to the invention, wherein the power plant is stretched over a cove;

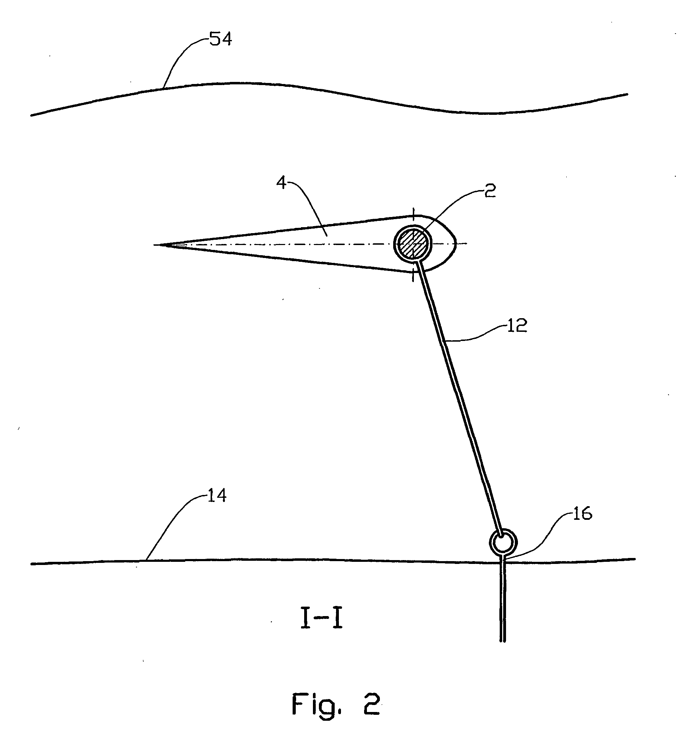

- Fig. 2: schematically shows, at a larger scale, a section I-I as indicated on fig. 1;
- Fig. 3: schematically shows, in section and at an even larger scale, a power engine disposed in a foil; and

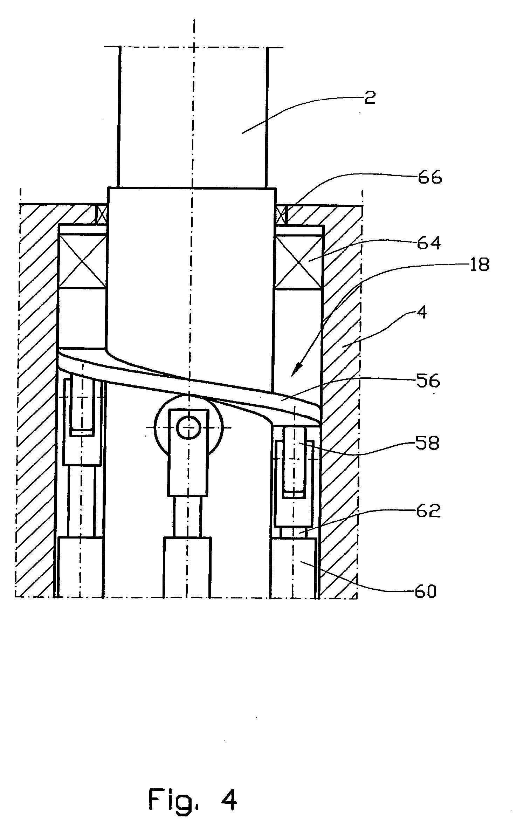

- Fig. 4: schematically shows a section of a power engine of an alternative embodiment.

In the drawings, reference numeral 1 indicates a wave power plant comprising a number of foils 4 pivotal about a body 2.

The body 2, which is comprised of a pipe in this preferred exemplary embodiment, is pretensioned between a first fastener 6 and a second fastener 8. The fasteners 6, 8 are located at either side of a cove 10.

The fasteners 6, 8 are formed in a manner allowing them to withstand tensional forces as well as torsional forces, insofar as the body is pretensioned between the fasteners 6, 8 by means of a tension device (not shown), for example in the form of a tackle or a hydraulic cylinder.

One end portion of a stay 12 is connected in a torsional-stiff manner to the body 2 and between two foils 4. At its opposite end portion, the stay 12 is anchored to a seabed 14 by means of a fastener 16.

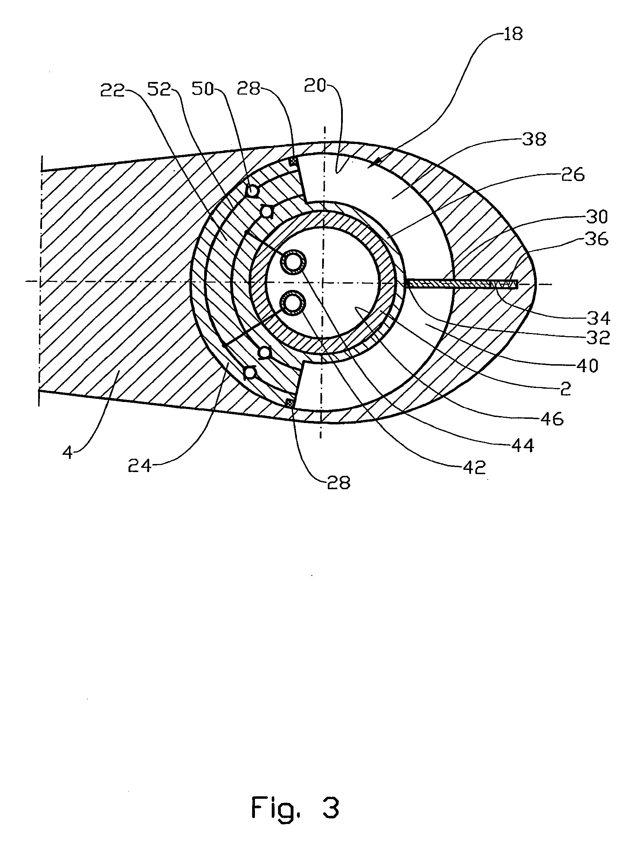

A power engine 18 in the form of a hydraulic pump is disposed between the body 2 and each of the foils 4, see fig. 3.

The body 2 extends through a bore 20 in the foil 4. A sleeve part 22 is attached to the body 2 and encircles it. The sleeve part 22 is formed with a relatively large outer radius over a first circular sector 24 and a smaller radius over a second circular sector 26.

The first circular sector 24 is provided with sector gaskets 28 arranged so as to be able to seal the bore 20.

A wing 30 with a wing seal 32 is disposed in a movable manner in a wing slot 34 in the foil 4, and the wing 30 is structured in a manner allowing it to seal against the second circular sector 26. The wing 30 is pretensioned by means of at least one spring 36.

The wing 30 divides a space, which is formed between the bore 20 and the second circular sector 26, into a first pump chamber 38 and a second pump chamber 40.

A supply pipe 42 and a pressure pipe 44 extends within a cavity 46 in the body 2 and are connected to a hydraulic pump onshore.

The two pump chambers 38, 40 communicate with the supply pipe 42 and the pressure pipe 44 via check valves 50 and conduits 52.

The pump chambers 38, 40 are sealed in an axial direction by sealing end walls (not shown).

When the foil 4 oscillates upwards, i.e. clockwise in fig. 3, by virtue of being lifted by a wave 54, hydraulic fluid flows in a manner known *per* se from the supply pipe 42 and into the first pump chamber 38, and via respective conduits 52 and the check valve 50. At the same time, pressurized hydraulic fluid flows from the second pump chamber 40 and to the pressure pipe 44 via respective conduits 52 and the check valve 50.

When the foil 4 pivots in the opposite direction, hydraulic fluid flows in a correspond manner to the second pump chamber 40 from the first pump chamber 38.

In this embodiment, the power engine 18 is suitable when the foil 4 always is to assume one direction from the body 2.

If the foil 4 is to be able to work in different directions, the power engine 18 of fig. 3 is unsuitable.

In an alternative embodiment, the power engine 18 comprises a cam 56 encircling the body 2. Rollers 58, which are connected to respective piston rods 62 of hydraulic cylinders 60, bear against the cam 56 in the axial direction of the body 2. Several hydraulic cylinders 60 may be distributed about the body 2, insofar as a pilot pressure in a supply line (not shown) ensures that the rollers 58 bear against the cam 56 also during the plus-strokes of the piston rods 62.

Advantageously, the cam 56 may be attached to the foil 4, whereas the hydraulic cylinders 60 are attached to the body 2.

Axial forces due to the hydraulic cylinders 60 are supported by a bearing 64, and a seal 66 prevents water from entering into the bearing 64.

Hydraulic liquid is pumped by means of the hydraulic cylinders 60 via valves (not shown) when the cam 56 is rotated relative to the cylinders 60. In this alternative embodiment, the power engine 18 may work irrespective of which angle the foil 4 assumes about the body 2.

## Claims

1. A wave power plant (1), wherein, in use, a submerged foil (4) is pivotally supported about a body (2), and wherein the foil (4) is structured in a manner allowing it to be set into an oscillating, pivotal motion about the body (2),
**characterized in that** the body (2) is pretensioned and is provided with a plurality of foils (4); and
- wherein a power engine (18), which is connected between the foil (4) and the body (2), is structured in a manner allowing it to deliver power by means of the pivotal motion of the foil (4).

2. The wave power plant in accordance with claim 1, **characterized in that** the body (2) is stretchable over a cove (10) or over a strait.

3. The wave power plant in accordance with claim 1, **characterized in that** a stay (12), at one end portion thereof, is connected to the body (2), whereas the opposite end portion thereof is, when in use, anchored to a seabed (14).

4. The wave power plant in accordance with claim 1, **characterized in that** the body (2) comprises a wire.

5. The wave power plant in accordance with claim 1, **characterized in that** the body (2) comprises a pipe.

6. The wave power plant in accordance with claim 1, **characterized in that** the power engine (18) is a pump.

7. The wave power plant in accordance with claim 1, **characterized in that** the power engine (18) is an electric generator.

## Patentansprüche

1. Wellenkraftwerk (1), wobei, im Gebrauch, eine eingetauchte Folie (4) drehbar an einem Körper (2) gelagert ist, und wobei die Folie (4) in einer Weise strukturiert ist, welche es ihr erlaubt, in eine oszillierende Schwenkbewegung um den Körper (2) versetzt zu werden,
**dadurch gekennzeichnet, dass** der Körper (2) vorgespannt ist und mit einer Vielzahl von Folien versehen ist; und
- wobei eine Kraftmaschine (18), welche zwischen der Folie (4) und dem Körper (2) angeordnet ist, in einer Weise strukturiert ist, welche es ihr erlaubt, Energie durch die Schwenkbewegung der Folie (4) zu liefern.

2. Wellenkraftwerk gemäss Anspruch 1, **dadurch gekennzeichnet, dass** der Körper (2) über eine Bucht (10) oder über eine Meerenge spannbar ist.

3. Wellenkraftwerk gemäss Anspruch 1, **dadurch gekennzeichnet, dass** eine Verankerung (12), an einem Endbereich davon, mit dem Körper (2) verbunden ist, wobei der andere Endbereich davon, wenn in Gebrauch, mit einem Meeresboden (14) verankert ist.

4. Wellenkraftwerk gemäss Anspruch 1, **dadurch gekennzeichnet, dass** der Körper (2) einen Draht aufweist.

5. Wellenkraftwerk gemäss Anspruch 1, **dadurch gekennzeichnet, dass** der Körper (2) ein Rohr aufweist.

6. Wellenkraftwerk gemäss Anspruch 1, **dadurch gekennzeichnet, dass** die Kraftmaschine (18) eine Pumpe ist.

7. Wellenkraftwerk gemäss Anspruch 1, **dadurch gekennzeichnet, dass** die Kraftmaschine (18) ein elektrischer Generator ist.

## Revendications

1. Centrale houlomotrice (1), où, en cours d'utilisation, un film immergé (4) est supporté de façon pivotante autour d'un corps (2), et où le film (4) est structuré d'une manière lui permettant d'être mis en mouvement oscillant pivotant autour du corps (2),
**caractérisé en ce que** le corps (2) est précontraint et il est prévu d'une pluralité de films (4) ; et
- où un accumulateur (18), qui est connecté entre le film (4) et le corps (2), est structuré d'une manière lui permettant de délivrer de l'énergie par moyen du mouvement de pivotement du film (4).

2. Centrale houlomotrice selon la revendication 1, **caractérisé en ce que** le corps (2) est étirable sur une crique (10) ou sur un détroit.

3. Centrale houlomotrice selon la revendication 1, **caractérisé en ce que** un ancrage (12), à une partie d'extrémité de celui-ci, est connecté au corps (2), où la partie d'extrémité opposée de celui-ci est, en cours d'utilisation, ancrée au fond de la mer (14).

4. Centrale houlomotrice selon la revendication 1, **caractérisé en ce que** le corps (2) comprend un fil.

5. Centrale houlomotrice selon la revendication 1, **caractérisé en ce que** le corps (2) comprend un tuyau.

6. Centrale houlomotrice selon la revendication 1, **caractérisé en ce que** l'accumulateur (18) est une pompe.

7. Centrale houlomotrice selon la revendication 1, **caractérisé en ce que** l'accumulateur (18) est une génératrice électrique.
